# DEMANDE DE BREVET EUROPEEN

(11) **EP 0 952 084 A1**
(43) Date de publication de la demande: **27.10.1999**
(21) Numéro de dépôt: 99420095.4
(22) Date de dépôt: 13.04.1999
(51) Int. Cl.: B65B 53/02, B65B 21/24, B29C 63/42

(54) **Procédé et dispositif pour thermorétracter une gaine en matière synthétique sur une bouteille de gaz et bouteille obtenue**

(30) Priorité: 15.04.1998 FR 9804993
(71) Demandeur: Cottet, Michel, 01450 Poncin (FR)
(72) Inventeur: Cottet, Michel, 01450 Poncin (FR)
(74) Mandataire: Perrier, Jean-Pierre

(57) **Abrégé**

Ce procédé consiste à engager la gaine (42) autour de la bouteille de gaz (40) disposée verticalement, à déplacer verticalement autour de la bouteille et de la gaine, une source annulaire de chaleur (14) comportant une zone supérieure de préchauffage de la gaine, fournissant une énergie calorifique par unité de surface de valeur (E1), et une zone inférieure de rétraction de la gaine, fournissant une énergie calorifique par unité de surface de valeur (E2), supérieure à (E1).

## Description

L'invention est relative à un procédé et un dispositif pour thermorétracter une gaine en matière synthétique sur une bouteille de gaz, c'est-à-dire sur un récipient cylindrique destiné à résister à une pression interne élevée.

Actuellement, les bouteilles de gaz sous pression, à usage industriel ou médical, se présentent sous différentes dimensions allant, pour les diamètres, d'une valeur de 140 à 245 mm, et pour leur hauteur, d'une valeur de 420 à 1 500 mm. Chaque bouteille est composée d'une enveloppe métallique épaisse comportant, à sa base, un fond bombé soudé sur une embase de stabilisation et, à son sommet, une tête ogivale dotée d'une vanne de fermeture avec embout de raccordement.

Traditionnellement, les indications relatives aux essais en pression de la bouteille, à la nature du gaz contenu dans cette bouteille, et au fournisseur de gaz, sont poinçonnées sur la face extérieure de la tête ogivale qui, bien souvent, est recouverte d'une couche de peinture dont la couleur dépend de la nature du gaz.

Actuellement, la protection de la surface externe de la bouteille est assurée par une couche de peinture qui doit être renouvelée au moins une fois entre deux tests d'épreuve de la bouteille et après chaque test d'épreuve. Cette rénovation s'effectue au moyen d'une opération longue et fatiguante puisque, exigeant de déplacer manuellement des récipients ayant une masse à vide variant de 15 à 35 kg. En pratique, la cadence de rénovation est de l'ordre de 40 bouteilles par homme et par jour, non compris le temps de séchage de la peinture.

Pour améliorer la protection de la face externe de la bouteille contre l'oxydation, mais aussi contre les chocs, tout en cherchant à augmenter la cadence de mise en place de cette protection, il a été envisagé d'entourer le récipient par une gaine en matière synthétique thermorétractable, de plus grande dimension transversale que le diamètre de la bouteille devant la recevoir, et d'assurer cette rétraction par chauffage.

Il s'est alors révélé que la technique consistant à déplacer les récipients en les posant verticalement sur un convoyeur pour les faire passer dans un tunnel de chauffage, n'était pas satisfaisante en raison, d'une part, du manque de stabilité du récipient ayant une surface de sustentation réduite par rapport à sa hauteur et, à sa masse, et d'autre part, en raison de l'hétérogénéité de la rétraction de la gaine sur la bouteille.

En effet, il est apparu, pour tous les types de bouteille, que la rétraction de la gaine qui dépend des gradients locaux de température pouvant être différents sur sa hauteur, s'effectue de manière aléatoire en favorisant l'emprisonnement de poches d'air formant des saillies qui déparent l'aspect esthétique final de la bouteille.

Une autre technique, consistant à disposer horizontalement chaque bouteille en la posant par ses extrémités sur des supports déplaçables longitudinalement, ne donne pas non plus satisfaction et cela pour deux raisons. La première est que cette technique nécessite un effort physique important pour soulever et coucher chaque bouteille, puis ultérieurement la soulever et la redresser. La seconde est que, non seulement, elle n'améliore pas l'élimination des poches d'air, mais au contraire la favorise, puisque, lors du passage dans un tunnel de chauffage, la gaine thermorétractable chauffée tend à pendre en boucle sous la bouteille, en formant ainsi, sous cette bouteille, une partie dont la rétraction s'effectue encore plus irrégulièrement et favorise l'emprisonnement de poches d'air.

La présente invention a pour objet de remédier à ces inconvénients en fournissant un procédé permettant d'obtenir une rétraction homogène d'une gaine thermorétractable sur une bouteille de gaz disposée verticalement pour obtenir un revêtement lisse et régulier, sans poche d'air apparente, tout en exigeant un minimum d'effort physique.

Ce procédé consiste, à engager la gaine autour de la bouteille de gaz disposée verticalement, à déplacer verticalement autour de la bouteille une source annulaire de chaleur comportant une zone supérieure de préchauffage de la gaine, fournissant une énergie calorifique par unité de surface de valeur E1, et une zone inférieure de rétraction de la gaine fournissant une énergie calorifique par unité de surface de valeur E2, supérieure à E1.

Ainsi, la gaine thermorétractable est d'abord soumise à un préchauffage qui élève sa température, sans engendrer une trop grande rétraction, puis à un chauffage plus violent qui provoque sa rétraction brutale. La combinaison de cette rétraction brutale avec le déplacement de la source annulaire par rapport à la bouteille forme, à l'avant de la zone rétractée de la gaine, un cône qui, en se déplaçant, chasse devant lui l'air contenu entre la gaine et la face périphérique du récipient, sensiblement de la même façon que le feraient des mains humaines lissant la gaine au fur et à mesure de l'avance de sa rétraction. Il en résulte que l'air contenu entre la gaine et la bouteille est chassé au fur et à mesure et que le revêtement, ainsi obtenu, est exempt de toute poche d'air.

La valeur des énergies calorifiques dégagées par la source annulaire, de même que la vitesse de déplacement de cette source, sont déterminées en fonction des caractéristiques chimico-physiques de la matière synthétique utilisée et de la dimension diamétrale de la bouteille de gaz.

Dans une forme de mise en oeuvre, le déplacement de la source annulaire de chaleur est réalisé en deux phases, à savoir une première phase pendant laquelle la source de chaleur est descendue, à vitesse rapide V1, autour de la bouteille pour amener sa zone aval de rétraction autour du fond bombé de celle-ci et d'une seconde phase de montée à vitesse V2, de valeur inférieure à V1.

Dans ces conditions, la première phase de descente rapide assure un préchauffage de la gaine, sans déclencher une quelconque rétraction mais permet à la zone aval de rétraction de venir au niveau du fond bombé de la bouteille pour, pendant la phase d'inversion de sens, et grâce à la forte énergie calorifique de cette zone, assurer le rabattement par rétraction de l'extrémité inférieure de la gaine sur le fond bombé de la bouteille. Ce rabattement contribue ultérieurement au calage en translation longitudinale du revêtement sur la bouteille.

L'invention concerne également le dispositif pour la mise en oeuvre de ce procédé.

Ce dispositif comprend :
- un bâti,
- un manchon chauffant d'axe longitudinal vertical et de diamètre intérieur supérieur à celui extérieur de la plus grande bouteille de gaz pouvant être rencontrée, ce manchon portant sur, sensiblement le quart inférieur de sa hauteur, des moyens de production de chaleur dégageant une énergie calorifique par unité de surface supérieure à la valeur de l'énergie calorifique par unité de surface dégagée par les moyens de production de chaleur disposés sur le reste de sa hauteur,
- un bras reliant le manchon à un coulisseau mobile sur des glissières verticales du bâti,
- des moyens moteurs aptes à déplacer le coulisseau dans les deux sens et avec des vitesses différentes et réglables,
- et des moyens de commande régissant l'alimentation des moyens de chauffage et des moyens moteurs de déplacement vertical du manchon.

Dans une forme d'exécution, le manchon comprend une virole intérieure sur la face intérieure de laquelle sont fixés, au moins deux ensembles de résistance électrique en spirale, alimentés chacun par un circuit distinct, l'ensemble de résistances disposées sur la partie inférieure de la virole ayant un pas d'enroulement inférieur à celui du pas d'enroulement de l'ensemble de résistances disposées en partie supérieure, ladite virole étant entourée par une virole de plus grand diamètre qu'elle, avec laquelle elle forme un caisson annulaire contenant un isolant thermique.

En raison de sa structure, le manchon chauffant peut indifféremment être utilisé pour assurer la thermorétraction sur des récipients ayant un diamètre allant de la plus petite à la plus grande dimension, c'est-à-dire ayant un diamètre allant de 140 à 245 mm, puisque la puissance calorifique émise par les résistances peut être régulée en fonction des besoins.

Selon les applications, la gaine en matière synthétique est opaque ou translucide et s'étend de la base du récipient en recouvrant seulement sa partie cylindrique ou sa partie cylindrique et sa partie ogivale.

Dans une application préférée, le revêtement s'étend jusqu'à la tête ogivale et emprisonne contre cette tête ogivale, une mémoire électronique contenant des données d'identification, lisibles à distance, par une unité de lecture.

Cette disposition permet de supprimer toute opération de marquage par poinçonnage sur la partie ogivale pour indiquer la dernière date d'épreuve, le fournisseur, et le gaz contenu dans le récipient, puisque ces données sont incluses dans la mémoire électronique qui peut également contenir pour chaque remplissage, la date et le volume transféré, ou toute autre donnée favorisant la gestion ou la distribution des bouteilles. Par sa position sur la tête ogivale, le composant électronique est parfaitement protégé contre les chocs, tout en restant accessible pour des moyens de lecture, même lorsque la bouteille est juxtaposée à d'autre bouteille.

D'autres caractéristiques et avantages ressortiront de la description qui suit en référence au dessin schématique annexé représentant, à titre d'exemple, une forme d'exécution du dispositif pour la mise en oeuvre du procédé et des bouteilles ainsi revêtues.
Figure 1 est une vue en perspective éclatée de la partie inférieure du dispositif,
Figure 2 est une vue de côté en coupe transversale partielle, lorsqu'il est en début de positionnement sur une bouteille,
Figure 3 est une vue de côté en élévation d'une bouteille avec coupe partielle du manchon chauffant au début de la phase de montée rapide,
Figure 4 est une vue en plan par dessus de l'installation,
Figure 5 est une vue partielle de côté en élévation avec coupe partielle de la partie supérieure d'une bouteille de gaz équipée d'une mémoire électronique.

Dans ce dessin, la référence numérique 2 désigne un bâti composé d'une semelle 3 portant deux paires de glissières verticales 4 pour un coulisseau mobile 5. Le coulisseau 5 porte deux paires de galets 6, d'axe horizontal, et, dans chaque paire, les galets superposés circulent entre les glissières verticales d'une paire de glissières 4. Le coulisseau est relié à des moyens moteurs qui, dans cette forme d'exécution, sont constitués par un moteur électrique 11 dont l'arbre de sortie porte une poulie motrice 7 sur laquelle circule un câble 8 reliant le coulisseau 5 à un contrepoids 9. Une poulie de renvoi 10 est montée libre en rotation sur un axe horizontal 12 porté par le bâti. Le coulisseau porte un bras 13 à l'extrémité duquel est fixé un manchon annulaire de chauffage 14.

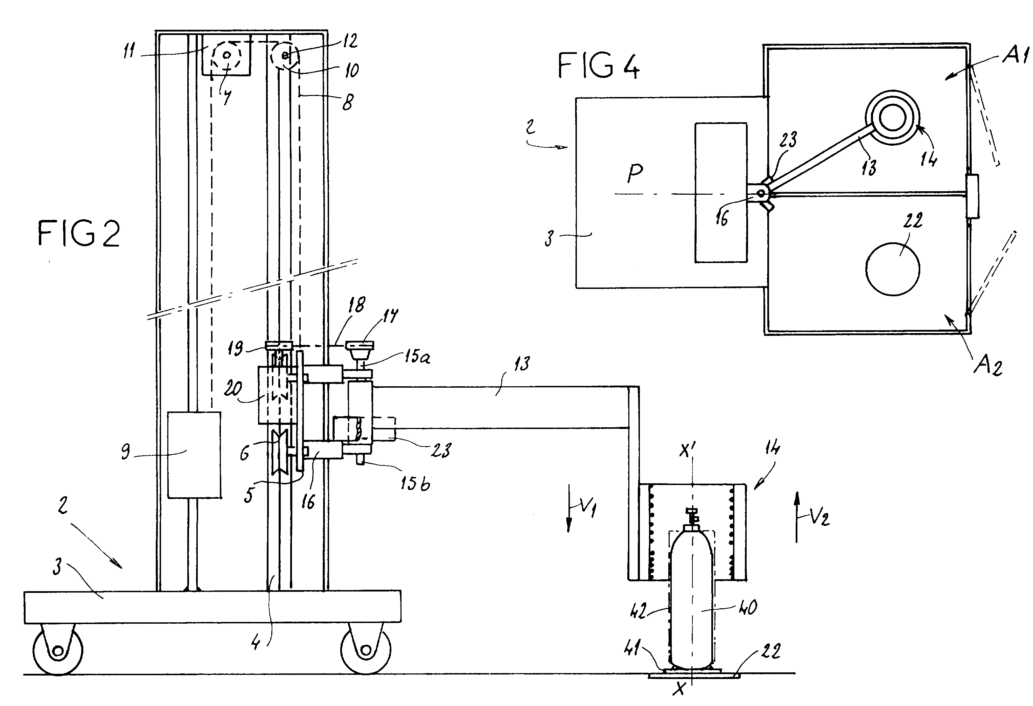

Le dispositif représenté comporte deux postes de travail A1 et A2, comme montré à la figure 4. Le bras 13 est muni, à son extrémité opposée à celle portant le manchon 14, c'est-à-dire à son extrémité côté bâti, de deux tenons verticaux coaxiaux, respectivement supérieur 15a et inférieur 15b. Ces tenons sont montés libres en rotation dans une chape 16, portée par le coulisseau 5, et le tenon 15a est lié en rotation à une roue dentée 17, elle-même reliée par une chaîne 18 à une roue dentée motrice 19. Cette dernière est calée sur l'arbre vertical d'un moteur électrique 20 porté par le coulisseau 5 dans l'intervalle entre les deux paires de glissières verticales 4.

Ces moyens moteurs 17, 18, 19, 20 permettent donc de faire pivoter le bras 13 et le manchon 14 constituant la source annulaire de chaleur, sur une fraction de tour, c'est-à-dire de l'ordre de 15 à 30°, de part et d'autre du plan médian P du dispositif (figure 4).

Chaque poste de travail A1, A2 est muni d'une sole 22 constituée par un disque circulaire et métallique de forte épaisseur ayant pour fonction de faciliter le positionnement d'une bouteille, mais aussi d'accumuler la chaleur transmise à la bouteille par la rétraction.

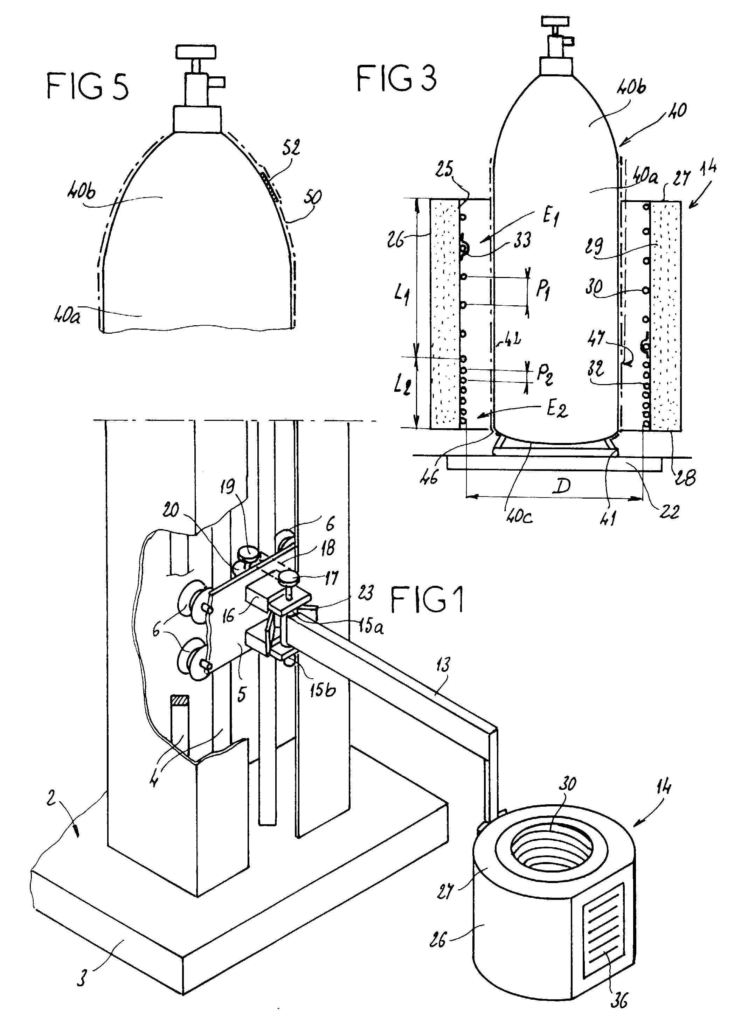

Le bras 13 est muni de moyens le positionnant, dans chaque poste, de manière que l'axe vertical du manchon 14 soit sensiblement coaxial à l'axe vertical de la sole. Dans la forme d'exécution représente, ces moyens sont constitués par les deux ailes d'une équerre en V 23, soudée sur la chape 16 du coulisseau 5, comme montré aux figures 1 et 4.

Comme montré plus en détails à la figure 3, le manchon chauffant 14 est composé d'une virole interne 25 qui est reliée à une virole externe 26 par une couronne supérieure 27 et par une couronne inférieure 28. La cavité annulaire 29, ainsi constituée, est remplie par un matériau isolant réduisant les pertes calorifiques vers l'extérieur, telles que de la laine de roche.

Sur la face intérieure de la virole intérieure 5, sont fixés deux ensembles de résistances électriques, à savoir un ensemble supérieur 30 et un ensemble inférieur 32. L'ensemble supérieur 30 s'étend sur une hauteur L1 correspondant sensiblement aux trois quart de la hauteur du manchon, tandis que l'ensemble inférieur 32 s'étend sur une hauteur L2 correspondant sensiblement au quart inférieur de la hauteur du manchon. Les résistances sont en spirales et sont fixées contre la virole 25 par des cavaliers 33. Le pas P2 de répartition des spires de l'ensemble de résistances inférieure 32 est inférieur au pas P1 de répartition des spires de l'ensemble supérieur, de manière à pouvoir dégager une énergie calorifique par unité de surface E2 supérieure à celle E1 dégagée par l'ensemble supérieur 30 de résistances supérieure 30, dans les mêmes conditions d'alimentation électrique. Ces deux ensembles 30 et 32 sont alimentés par des circuits distincts, à travers un boîtier de commande et de régulation 35 (figure 4) comportant également les moyens de commande de l'alimentation des moteurs électriques 6 et 20. portés par le bâti.

La quantité de courant alimentant chacun des ensembles 30 et 32 et, en conséquence, sa puissance calorifique est déterminée au coup par coup en fonction du diamètre de la bouteille, et donc de l'importance de l'espace radial entre la gaine 42 et la résistance, mais des caractéristiques propres de cette gaine 42.

Il est évident que le diamètre intérieur D des ensembles de résistance a une valeur plus grande que le plus grand diamètre des bouteilles pouvant être acceptées, et par exemple, est de l'ordre de 570 mm pour un manchon pouvant accueillir des bouteilles ayant un diamètre allant de 140 à 245 millimètres.

La figure 1 montre que la cavité annulaire 29 du manchon communique avec l'extérieur par une ouverture d'aération 36. Pour éviter l'accumulation des calories dans cette cavité annulaire, celle-ci peut être raccordée, à l'opposé de l'ouverture 36, à un générateur de flux d'air de ventilation, non représenté.

Pour thermorétracter une gaine 42 en matière synthétique sur une bouteille de gaz 40, au moyen de ce dispositif, la bouteille 40 est d'abord amenée à l'un des postes A1 ou A2, par exemple par roulage de son fond, jusqu'à ce que son embase 41 repose sur la sole 22, avec son axe vertical x'-x passant, sensiblement, par celui de ladite sole, comme montré figure 2. On notera que cette opération de mise en place peut s'effectuer avec la bouteille déjà équipée d'une gaine thermorétractable 42, car mise en place hors de l'installation de thermorétraction.

Cette gaine 42 peut s'étendre uniquement sur la partie cylindrique 40a de la bouteille, comme montré figure 3, ou sur cette partie cylindrique 40a et la partie ogivale 40b, comme montré à la figure 2. Dans le premier cas, la gaine est opaque, et ne s'étend pas sur la partie ogivale pour ne pas occulter les indications marquées par poinçonnage sur celle-ci, tandis que, dans l'autre cas, elle est translucide et permet, après sa rétraction, de lire les indications portées par poinçonnage sur la partie ogivale 40b du récipient.

Lorsque le récipient 40 et la gaine 42 sont positionnés sur la sole 22, le bras 13, alors en position haute, est pivoté de manière à amener l'axe longitudinal du manchon 14 en coïncidence avec celui de la bouteille 40. Ce pivotement est assuré par le moteur 20 qui, par la transmission 19, 18 et 17, provoque le pivotement du bras autour de l'axe de ses tenons 15a, 15b jusqu'à buter contre l'aile correspondante de l'équerre 23. A ce stade, le moteur électrique 11, provoquant le mouvement vertical du coulisseau 5 sur les glissières 4, est alimenté pour provoquer la descente du bras 13 et du manchon 14 à une vitesse rapide V1. Ce mouvement s'effectue jusqu'à ce que la base du manchon 14 vienne sensiblement au niveau du sol, et alors que les ensembles de résistances 30, 32 sont alimentés et assurent. en raison de la vitesse rapide, un préchauffage de la gaine 42, sans en provoquer la rétraction. Lorsque le manchon 14 arrive en fin de course inférieure, le moteur 11 est alimenté en sens inverse, de manière à assurer le déplacement vertical vers le haut de ce manchon, mais avec une vitesse V2 inférieure à V1. L'inversion de sens, et éventuellement un arrêt temporisé, permettant à l'ensemble de résistance inférieure 32, dégageant une violente énergie calorifique de rabattre par rétraction l'extrémité inférieure de la gaine 42, sous le fond bombé 40c de la bouteille. Cela forme ainsi une bavette 46 qui protège cette partie et surtout contribue au calage en translation longitudinale de la gaine sur la bouteille.

Cette rétraction sur le fond bombé 40c s'effectue d'autant plus aisément qu'elle bénéficie d'un apport calorifique supplémentaire. En effet, la sole 22, qui a accumulé la chaleur transmise par une bouteille de gaz ayant subi une rétraction, ne transmet cette chaleur, par conduction directe, au fond de la bouteille mise en place en prévision de l'opération suivante, et de cette bouteille à la gaine, en assurant ainsi un préchauffage de celle-ci.

Lors du déplacement longitudinal vers le haut du manchon 14, l'ensemble de résistances 30 assure le préchauffage de la gaine, tandis que l'ensemble inférieur 32 provoque sa rétraction violente sur le récipient. Dans la zone de transition entre la partie rétractée et la partie non rétractée de la gaine, il se forme ainsi une sorte de cône 47 qui, en combinaison avec le déplacement du manchon 14, chasse devant lui l'air emprisonné entre la gaine 42 et la face externe de la bouteille, comme le ferait la main humaine lissant la gaine sur la bouteille. Il en résulte, qu'au fur et à mesure du déplacement du manchon, l'air est chassé vers le haut, ce qui supprime toute formation de poche d'air entre la gaine et la bouteille et contribue à obtenir un revêtement final parfaitement lisse. Dès que le manchon parvient au-dessus du revêtement, son déplacement vers le haut peut être accéléré pour faciliter le dégagement de la bouteille. En fin de course verticale, le manchon est déplacé angulairement par le bras 13 pour venir au-dessus du poste de travail A2, où une autre bouteille de gaz avec sa gaine 42 a été mise en place, pendant l'opération de thermorétraction au poste A1.

Il ressort de ce qui précède que le dispositif selon l'invention permet de réduire considérablement le temps nécessaire à la mise en place d'un revêtement sur une bouteille de gaz, de simplifier les manipulations de mise en place et d'extraction des bouteilles et ainsi d'augmenter considérablement la cadence de travail.

A titre d'exemple, avec un dispositif à double poste comportant un anneau chauffant travaillant 1,5 minute par poste, un homme peut revêtir 360 bouteilles par jour, ce qui est bien supérieur à une cadence de 40 bouteilles/jour avec un revêtement peint. De plus, en fonction des applications, il est très aisé de remplacer une gaine colorée par une gaine de coloration différente.

Grâce à ce dispositif, les bouteilles sont protégées par un revêtement protecteur qui, non seulement, améliore leur aspect esthétique, mais aussi les protège efficacement pour les chocs. Cet amortissement des chocs dépend de l'épaisseur du revêtement et est adapté en fonction des besoins.

Dans une forme de mise en oeuvre, montrée à la figure 5, le revêtement 50 ainsi réalisé s'étend sur le corps cylindrique 40a et sur la tête ogivale 40b de la bouteille et emprisonne contre cette tête une mémoire électronique 52, telle qu'une puce, un transpondeur ou autre. Cette mémoire peut ainsi contenir des données d'identification de la bouteille, et par exemple son numéro, sa dernière date de mise à l'épreuve, mais aussi de son contenant, de sa dernière date de remplissage, de ses conditions de remplissage et, de manière générale, toute autre information favorisant la gestion ou la distribution de la bouteille et pouvant être lue à distance par une unité de lecture. Cette unité peut également être une unité d'écriture modifiant les données incluses dans la mémoire.

## Revendications

1. Procédé pour thermorétracter sur une bouteille de gaz (40) une gaine (42) en matière synthétique thermorétractable, **caractérisé en ce qu**'il consiste, à engager la gaine (42) autour de la bouteille de gaz (40) disposée verticalement, à déplacer verticalement autour de la bouteille et de la gaine, une source annulaire de chaleur (14) comportant une zone supérieure de préchauffage de la gaine, fournissant une énergie calorifique par unité de surface de valeur (E1), et une zone inférieure de rétraction de la gaine, fournissant une énergie calorifique par unité de surface de valeur (E2), supérieure à (E1).

2. Procédé selon la revendication 1, **caractérisé en ce que** le déplacement de la source annulaire (14) de chaleur est réalisé en deux phases, à savoir une première phase pendant laquelle la source de chaleur est descendue, à vitesse rapide (V1), autour de la bouteille (40) pour amener sa zone inférieure de rétraction autour du fond bombé de celle-ci et d'une seconde phase de montée, à vitesse (V2), de valeur inférieure à (V1).

3. Dispositif pour la mise en oeuvre du procédé selon l'une quelconque des revendications 1 et 2, **caractérisé en ce qu**'il comprend :
- un bâti (2),
- un manchon chauffant (14) d'axe longitudinal vertical et de diamètre intérieur (D) supérieur à celui extérieur de la plus grande bouteille de gaz (40) pouvant être rencontrée, ce manchon portant sur, sensiblement le quart inférieur de sa hauteur, des moyens (32) de production de chaleur dégageant une énergie calorifique (E2) par unité de surface supérieure à la valeur (E1) de l'énergie calorifique par unité de surface dégagée par les moyens (30) de production de chaleur disposés sur le reste de sa hauteur,
- un bras (13) reliant le manchon (14) à un coulisseau (5) mobile sur des glissières verticales (4) du bâti (2),
- des moyens moteurs (6, 7, 8) aptes à déplacer le coulisseau (5) dans les deux sens et avec des vitesses différentes et réglables,
- et des moyens de commande (35) régissant l'alimentation des moyens de chauffage (30, 32) et des moyens moteurs (6) de déplacement vertical du manchon (14).

4. Dispositif selon la revendication 3, **caractérisé en ce que** le manchon (14) comprend une virole intérieure (25) sur la face intérieure de laquelle sont fixés, au moins deux ensembles (30, 32) de résistance électrique en spirale, alimentés chacun par un circuit distinct, l'ensemble (32) de résistances disposées sur la partie inférieure de la virole ayant un pas d'enroulement (P2) de valeur inférieure à celle du pas (P1) d'enroulement de l'ensemble (30) de résistances disposées en partie supérieure, ladite virole (25) étant entourée par une virole (26) de plus grand diamètre qu'elle, avec laquelle elle forme un caisson annulaire (29) contenant un isolant thermique.

5. Dispositif selon la revendication 4, **caractérisé en ce que** le caisson annulaire (29) communique avec l'extérieur par au moins une ouverture d'aération (36) et est raccordé, à l'opposé de cette ouverture (36), à un flux d'air de ventilation.

6. Dispositif selon la revendication 3, **caractérisé en ce que** le bras (13) portant le manchon (14) est muni, à son extrémité opposée à celle liée à ce manchon (14), de deux tenons cylindriques verticaux (15a, 15b) par lesquels il est articulé dans une chape (16) du coulisseau (5) et l'un (15a) des tenons est lié en rotation à des moyens moteurs (17, 18, 19, 20) aptes à le faire pivoter d'une fraction de tour de part et d'autre du plan médian vertical du bâti pour amener l'axe longitudinal du manchon (14) en coïncidence avec l'axe vertical de l'un des postes de positionnement (A1, A2) d'une bouteille de gaz (40) répartis autour du bâti (2).

7. Dispositif selon la revendication 3, **caractérisé en ce que** chaque poste de positionnement (A1, A2) d'une bouteille de gaz (40) est délimité par une sole (22) métallique et massive, constituant accumulateur thermique.

8. Bouteille de gaz revêtue par le procédé selon la revendication 1 et comportant un corps cylindrique et une tête ogivale (40b), **caractérisée en ce que** la gaine (42) la revêtant est réalisée dans une matière synthétique thermorétractable opaque ne s'étendant que sur sa partie cylindrique (40a) et s'arrêtant à la limite entre cette partie et sa tête ogivale (40b).

9. Bouteille de gaz revêtue par le procédé selon la revendication 1 et comportant un corps cylindrique (40a) et une tête ogivale (40b), **caractérisée en ce que** la gaine (42) la revêtant est réalisée dans une matière synthétique thermorétractable translucide et s'étend sur le corps cylindrique (40a) et sur la tête ogivale (40b).

10. Bouteille de gaz revêtue par le procédé selon la revendication 1 et comportant un corps cylindrique (40a) et une tête ogivale (40b), **caractérisée en ce que** le revêtement s'étend sur le corps et sur la tête de la bouteille et emprisonne contre la tête ogivale une mémoire électronique (52) contenant des données d'identification lisibles à distance par une unité de lecture.
